Europäisches Patentamt

European Patent Office

Office européen des brevets

(11) Veröffentlichungsnummer: **0 519 126 A1**

## (12) EUROPÄISCHE PATENTANMELDUNG

(21) Anmeldenummer: **91250118.6**

(22) Anmeldetag: **21.06.91**

(51) Int. Cl.⁵: **B60R 13/00**

(43) Veröffentlichungstag der Anmeldung:
**23.12.92 Patentblatt 92/52**

(84) Benannte Vertragsstaaten:
**AT CH DE LI**

(71) Anmelder: **Schuppa, Wilhelm Georg**
**Brettnacher Strasse 15A**
**W-1000 Berlin 37(DE)**

(72) Erfinder: **Schuppa, Wilhelm Georg**
**Brettnacher Strasse 15A**
**W-1000 Berlin 37(DE)**

(74) Vertreter: **Christiansen, Henning**
**Dipl.-Ing. Henning Christiansen Patentanwalt**
**Pacelliallee 43/45**
**W-1000 Berlin 33(DE)**

(54) **Vorrichtung zur Diebstahlsicherung.**

(57) Die Erfindung betrifft eine Vorrichtung zur Diebstahlsicherung eines Emblems oder sonstigen extern zugänglichen Zubehörteils eines Fahrzeugs, vorzugsweise des sternförmigen Emblems eines Personenkraftwagens des Typs Mercedes, welches mit einer eine Schaltvorrichtung aufweisenden elektrischen Alarmanlage verbunden ist. Es ist erfindungswesentlich, daß sie, als Verbindungsglied zwischen dem extern zugänglichen Fahrzeugzubehörteil (1) und der Alarmanlage (19) angeordnet, mindestens ein Verbindungselement (6) aufweist, durch welches eine zum Betätigen der Schaltvorrichtung (9) der Alarmanlage (19) erforderliche Kraftkomponente, die bei Drehbewegung des Zubehörteils erzeugt wird, übertragbar ist.

FIG.1

Die Erfindung betrifft eine Vorrichtung zur Diebstahlsicherung der im Oberbegriff des Anspruchs 1 angegebenen Art und bezieht sich insbesondere auf die Sicherung von extern zugänglichen Fahrzeugzubehörteilen, wie Emblemen u.ä. gegen unbefugtes Entfernen.

Aus dem deutschen Gebrauchsmuster G 87 05 425.6 ist eine Vorrichtung zur lösbaren Befestigung eines mechanischen Elements, insbesondere eines zubehörteils eines Emblems oder dergleichen, an einem Kraftfahrzeug bekannt, die es ermöglicht, daß das vor Diebstahl zu schützende Zubehörteil nur von einer befugten Person entnommen werden kann.

Diese Lösung besitzt jedoch den Nachteil, daß das zu sichernde Fahrzeugteil bei längerem Verlassen des Fahrzeugs ständig von dem Fahrzeugbesitzer mitgeführt werden muß und was dadurch zu besonderen Beschwerlichkeiten führt.

Darüberhinaus ist aus der DE-OS 28 00 130 eine Warnanlage zur Sicherung des Firmen-Emblems von Kraftfahrzeugen des Typs Mercedes, des sogenannten Mercedes-Sterns, gegen Diebstahl vorbekannt. Diese Lösung bezieht sich jedoch auf Fahrzeug-Modelle, bei denen das Firmen-Emblem durch Abziehen nach oben entfernt werden konnte und beinhaltet eine elektrische Kontaktvorrichtung, durch welche bei einer Zughöhe von mehr als 6 mm eine akustische Warnanlage eingeschaltet wird. Wird das Emblem nach Ertönen des Alarmsignal wieder losgelassen, nimmt das Emblem aufgrund der Wirkung einer in seiner Befestigungskonstruktion vorhandenen Schraubenfeder wieder seine ursprüngliche Stellung ein und die Alarmanlage wird abgeschaltet. Weiterentwicklungen beim Fahrzeughersteller führten jedoch dazu, daß durch eine verbesserte Befestigungsvorrichtung für den Mercedes-Stern eine vertikale Bewegung des Firmen-Emblems im wesentlichen ausgeschlossen ist.

Aus diesem Grunde ist die vorbeschriebene Warnanlage für Fahrzeugmodelle jüngeren Baujahrs, bei denen das Firmen-Emblem nur noch um ein bestimmtes Maß drehbar oder in Fahrtrichtung kippbar angeordnet ist, denkbar ungeeignet.

Ausgehend von den Mängeln des Standes der Technik liegt der Erfindung die Aufgabe zugrunde, eine Vorrichtung zur Diebstahlsicherung der eingangs genannten Gattung zu schaffen, die aus einer geringen Anzahl handelsüblicher Bauteile besteht, einfach aufgebaut und kostengünstig nachträglich an einem Kraftfahrzeug installierbar ist. Die Vorrichtung ist weiterhin so zu aufzubauen, daß sie dem Verhalten bzw. der Vorgehensweise von Personen, die ein unbefugtes Entfernen von Fahrzeugzubehörteilen beabsichtigen, Rechnung trägt.

Diese Aufgabe wird mit den kennzeichnenden Merkmalen des Anspruchs 1 gelöst.

Die vorliegende Erfindung trägt der Tatsache Rechnung, daß Personen, die beabsichtigen vom fremden Kraftfahrzeugen bestimmte Zubehörteile unberechtigt zu entfernen, stets Bewegungsabläufe einleiten, die einen bestimmten Anteil von Dreh- oder Schraubbewegungen aufweisen. Dies ist insbesondere der Fall, wenn eine Bewegung die Gegenstände des Interesses durch Ziehen oder Schieben in vertikaler bzw. horizontaler Richtung nicht möglich ist.

Dazu enthält die Vorrichtung zur Diebstahlsicherung von Emblemen oder sonstigen extern zugänglichen Zubehörteilen von Fahrzeugen erfindungsgemäß mindestens ein Verbindungselement, durch welches mittels einer von einen Zubehörteil ausgehenden Drehbewegung eine zum Betätigen der Schaltvorrichtung einer Alarmanlage erforderliche Kraftkomponente übertragbar ist.

Dabei ist es von besonderem Vorteil, wenn das die Drehbewegung übertragende Verbindungselement und die zur Auslösung der Alarmanlage verwendete Schaltvorrichtung so ausgebildet sind, daß sowohl Drehungen nach rechts als auch nach links erfaßt werden können. Damit kann auf einfache Weise erreicht werden, daß auch dann, wenn die unbefugt handelnde Person nach Ertönen des Alarmsignals das Zubehörteil in die Ausgangsstellung zurückzudrehen versucht, die Alarmanlage dadurch erneut einschaltbar ist.

Das Verbindungselement der Vorrichtung zur Diebstahlsicherung ist im wesentlichen stabförmig ausgebildet und besitzt einen runden oder viereckigen Querschnitt. Es ist erfindungsgemäß mit einem Ende direkt an das zu sichernde Fahrzeugzubehörteil angelenkt und mit dem anderen Ende über eine Kupplung mit der Schaltvorrichtung der Alarmanlage verbunden. Es hat sich für die Funktionsweise der Vorrichtung als besonders vorteilhaft erwiesen, wenn die Kupplung elastisch nachgiebig oder als Rutschkupplung ausgebildet ist. Dadurch wird auf einfache Weise gesichert, daß die Schaltvorrichtung der Alarmanlage mechanisch nicht überlastet wird und eine hohe Anzahl von Schaltvorgängen ohne Schaden zu nehmen ausführen kann, wenn nach Auslösen des Alarmsignals die Drehbewegung durch die unbefugt handelnde Person nicht sofort unterbrochen wird.

Nach einer bevorzugten Weiterbildung der Erfindung besteht die das Verbindungselement mit der Schaltvorrichtung verbindende Kupplung aus einem elastischen Schlauchstück oder einer weichen Schraubenfeder geeigneten Durchmessers. Die Kupplungsteile sind auf einfache Art und Weise auf das Verbindungselement bzw. auf den Schalthebel der Schaltvorrichtung aufschiebbar ausgebildet oder können durch an sich bekannte mechanische Mittel befestigt werden. Die Verwendung einer elastischen und aufschiebbaren Kupplung besitzt den besonderen Vorteil, daß auf einfache Weise ein möglicher, durch die Montage bedingter Versatz der Achsen von Verbindungselement und Schalthebel der Schaltvorrichtung ohne Einschränkung der Kraftübertragung ausgeglichen werden kann.

Wird der mechanische Widerstand der Schaltvorrichtung nach erfolgtem Schaltvorgang sehr groß, so beginnt nach Einleitung einer zusätzlichen Kraftkomponente in das Verbindungselement durch weitere Drehung des Zubehörteils das Schlauchstück bzw. die Schraubenfeder auf dem Verbindungselement und/oder auf dem Schalthebel der Schaltvorrichtung zu rutschen bzw. die Kupplungselemente verformen sich unter Einfluß der zusätzlichen Kraftkomponente um ein bestimmtes Maß. Rutschverhalten bzw. reversibles Verformen der Kupplungselemente ist auf einfache Weise durch Wahl der Abmessungen und Materialkennwerte festlegbar.

Die Schaltvorrichtung der Alarmanlage besteht aus einem an sich bekannten Schalter mit zwei oder mehr definierten Schaltzuständen, deren Schalthebel verdrehbar oder kippfähig angeordnet sind. In einer günstigen Weiterbildung ist als Schaltvorrichtung ein Potentiometer eingesetzt, dessen durch die Drehung bewirkte Widerstandsänderung unter Zwischenschaltung eines geeigneten Wandlers zum Einschalten der Alarmanlage nutzbar ist.

Bei der Erfindung ist es insbesondere günstig, daß die Rotationsbewegung für das den Alarm auslösenden Schalter direkt von einer im Befestigungsteil des Emblems vorhandenen Schraubenfeder übertragen werden kann, welche mit als elastisches Glied mit dem Stern verbunden ist und bei dem Original-Teil mittels eines Knebels, der durch das ringförmige Ende der Schraubenfeder hindurchgesteckt ist, an einem Rahmenteil fest ist. Nach Beseitigung des Knebels wird dessen Funktion von einem Kupplungselement übernommen, welches die Verbindung zum eigentlichen Alarmschalter herstellt.

Nach einer bevorzugten Weiterbildung der Erfindung besteht die Schaltvorrichtung zum Auslösen der Alarmanlage aus einem dreipoligen Kippschalter. Um den Kippschalter über eine Drehbewegung betätigen zu können, ist das Verbindungselement zweiteilig ausgebildet. Besonders günstig ist dei Kraftübertragung auf den Schalthebel des Kippschalters zu übertragen, wenn das mit dem Schalthebel in Wirkungseingriff stehende Teil des Verbindungselements an einem Ende gabelförmig ausgebildet ist. Die vorab beschriebene Kupplung ist erfindungsgemäß zwischen den beiden Teilen des Verbindungselements angeordnet.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine schematisierte Darstellung einer bevorzugten Ausführungsform der Vorrichtung zur Diebstahlsicherung,

Figur 2 das Schaltbild einer durch die in Figur 1 dargestellten Vorrichtung gesteuerten Alarmanlage,

Figur 3 eine Teilansicht einer vorteilhaften Weiterbildung der Vorrichtung zur Diebstahlssicherung nach Figur 1,

Figur 4 zwei Schnittansichten längs der Linie A...A bei verschiedenen Schaltzuständen der Vorrichtung zur Diebstahlsicherung nach Figur 3,

Figur 5 ein schematisches Schaltbild zur Weiterverarbeitung einer Widerstandsänderung zwecks Auslösung der Alarmanlage,

Figur 6 eine Gesamtdarstellung der erfindungsgemäßen Vorrichtung.

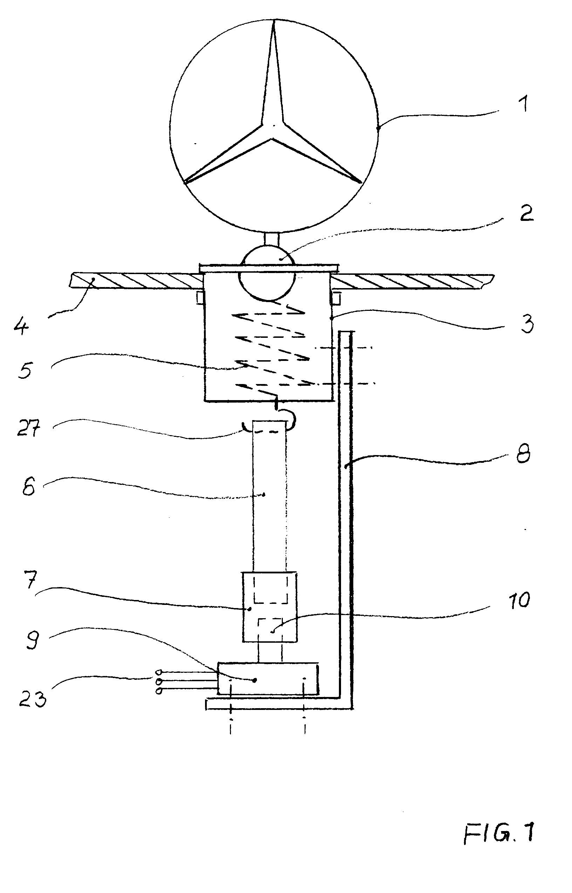

Die in Figur 1 in Einbaulage schematisch dargestellte Vorrichtung zur Diebstahlsicherung besteht aus einem Verbindungsglied 6, einer Kupplung 7 und einer Schaltvorrichtung 9, durch welche eine Alarmanlage steuerbar ist. Das gegen Diebstahl zu sichernde Mercedes-Emblem 1 bei Fahrzeugmodellen jüngeren Baujahrs ist durch ein Kugelgelenk 2 mit einem Befestigungseinsatz 3 verbunden, der seinerseits eine unlösbare Verbindung mit der Fahrzeugkarosserie 4 aufweist. Im Zusammenwirken einer im Befestigungseinsatz 3 integrierten Schraubenfeder 5 mit dem Kugelgelenk 2 kann das sternförmig ausgebildete Mercedes-Emblem 1 weder vertikal noch horizontal bewegt, sondern nur verdreht bzw. in Fahrzeuglängsrichtung nach hinten gekippt werden.

Die Vorrichtung zur Diebstahlsicherung wird unter Zuhilfnahme eines Tragelements 8, das mit dem Befestigungseinsatz 3 an dessen Außenseite verbunden ist, in einer unterhalb des Befestigungseinsatzes befindlichen Ebene fixiert. An dem winkelförmig ausgebildeten Tragelement 8 ist die Schaltvorrichtung 9 befestigt, wogegen das im wesentlichen stabförmig ausgebildete Verbindungselement 6 an einem seiner Enden mittels eines Hakens mit der im Befestigungseinsatz 3 befindlichen Schraubenfeder 5 verbunden ist. Die Schraubenfeder 5 stellt dabei einen Teil des Befestigungselements des Originalteils dar, so daß nur geringfügige Abänderungen notwendig sind.

Die Verbindung zwischen dem anderen Ende des Verbindungselements 6 und der Schaltvorrichtung 9 wird durch eine Kupplung 7 hergestellt. Die Kupplung 7 wird durch ein flexibles Schlauchstück oder durch eine gerade Schraubenfeder gebildet, wobei Schlauchstück bzw. Schraubenfeder jeweils auf das Ende des Verbindungselements 6 und auf den aus dem Schaltelement 9 herausragenden Schalthebel 10 unter Herstellung eines schwachen Preßsitzes aufgeschoben werden.

Wird das Fahrzeugemblem 1 um ein bestimmtes Maß verdreht, so erfolgt über Kugelgelenk 2, Federsatz 5, Verbindungselement 6 der Diebstahlsicherung und die Kupplung 7 eine Kraftübertragung auf den Schalthebel 10 des Schaltelements 9 und der Schaltvorgang zur Auslösung der Alarmanlage 19 wird eingeleitet.

Um die Schaltvorrichtung 9 in vorteilhafter Weise vor mechanischer Überlastung zu schützen und dadurch Funktionsstörungen zu vermeiden, ist der Preßsitz des Schlauchstücks bzw. der Schraubenfeder am Verbindungselement 6 oder am Schalthebel 10 nur so fest ausgeführt, daß die derart gebildete Kupplung zu rutschen beginnt, wenn der Schalthebel 10 nach erfolgtem Schaltvorgang an seinem Endpunkt anschlägt und damit in seiner Drehbeweglichkeit blockiert ist.

Es ist gleichfalls besonders günstig, wenn Kupplungsteile solche Elastizitätseigenschaften besitzen, die es bei festem Preßsitz von Schlauchstück oder Schraubenfeder auf dem Verbindungselement 6 und dem Schalthebel 10 zulassen, daß sich die Kupplungsteile ausreichend und reversible verformen können, wenn der Schalthebel 10 durch die Drehbewegung des Firmenemblems 1 an seinem Endanschlag befindlich ist und eine weitere Krafteinleitung durch Fortführen der Drehbewegung des Firmenemblems 1 erfolgt.

Das Schaltelement 9 ist in vorteilhafter Weise als DrehSchalter mit zwei festen Schaltstellungen, die durch Rechts- oder Linksdrehung des Schalthebels 10 einnehmbar sind, ausgeführt. Dadurch wird die Alarmanlage unabhängig von der Richtung der Drehbewegung, die von einer unbefugt handelnden Person an dem sternförmigen Firmenemblem 1 vorgenommen wird, ausgelöst.

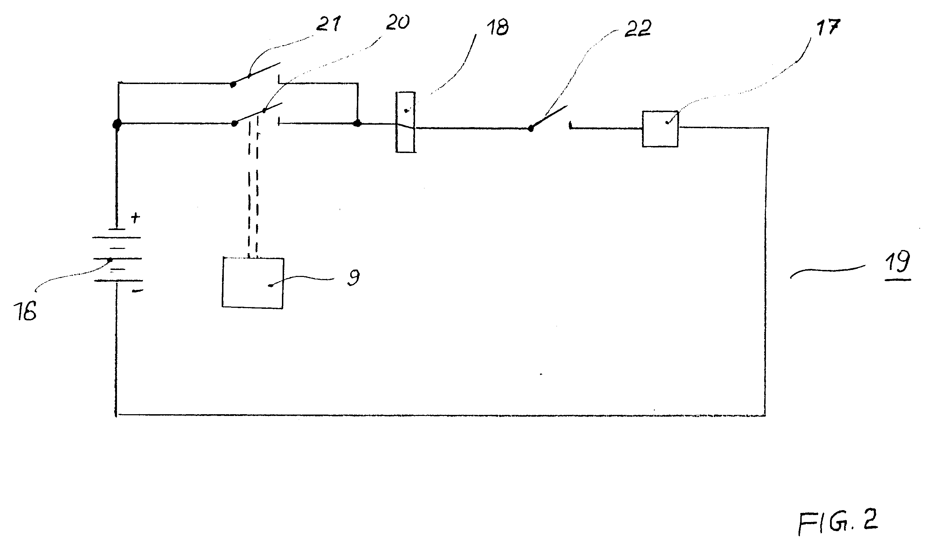

Die in Figur 2 als Schaltbild dargestellte Alarmanlage besteht aus einem optischen und/oder akustischen Signalgeber 17, der über den Schaltkontakt 20 der Schaltvorrichtung 9 der Vorrichtung zur Diebstahlsicherung mit Spannung aus dem von einer Batterie 16 gespeisten Bordnetz des Kraftfahrzeugs versorgt wird. Das im gleichen Strompfad angeordnete Relais 18 ist zeitgesteuert und sichert über einen Haltekontakt 21, der parallel zum Schaltkontakt 20 liegt, daß die einmal durch eine Diebstahlabsicht ausgelöste Alarmanlage 19 auch dann für einen vorgewählten und durch gesetzliche Bestimmungen teilweise vorgeschriebenen Zeitbereich eingeschaltet bleibt, auch wenn das Fahrzeugemblem durch die unbefugt handelnde Person in die Ausgangstellung zurückgedreht wird. Durch einen vom Fahrzeuginnenraum zugänglichen Betriebsschalter 22 kann die Alarmanlage 19 auf einfache Weise betriebsbereit gemacht oder abgeschaltet werden.

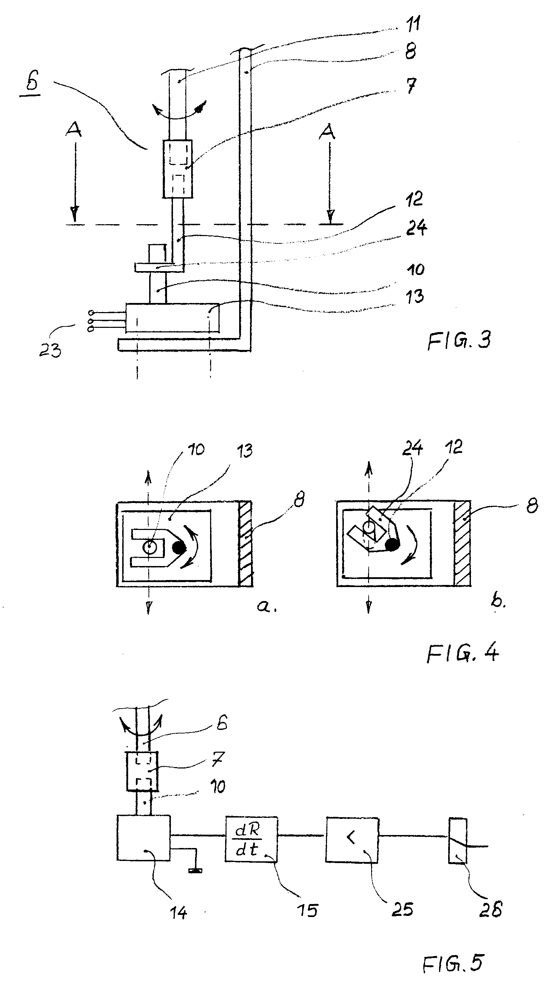

Bei der in Figur 3 dargestellten Teilansicht einer bevorzugten Weiterbildung der Vorrichtung zur Diebstahlsicherung ist die in Figur 1 gezeigte Schaltvorrichtung 9 durch einen dreipoligen Kippschalter 13 ersetzt. Um die bei der Diebstahlabsicht an dem Firmenemblem ausgeführte Drehbewegung zum Betätigen des Kippschalters geeignet umsetzen zu können, ist das Verbindungselement 6 zweiteilig ausgebildet. Es besteht aus einem geraden Teilstück 11 und einem gabelförmig gestalteten Teilstück 12. Die Teilstücke 11 und 12 sind durch die Kupplung 7, die die vorab beschriebenen Eigenschaften aufweist, verbunden. Das gabelförmige Teilstück 12 des Verbindungselements 6 besitzt an seinem der Kupplung 7 abgewandten Ende eine querab zum Schaft stehende Gabel 24, die mit dem Schalthebel 10 des Kippschalters 13 in Wirkungseingriff befindlich ist. Durch diese Art des Zusammenwirkens zwischen Verbindungselement 6 und Schalthhebel 10 des Kippschalter 13 wird die Drehbewegung des Verbindungselements 6 auf einfache Weise in eine Kippbewegung umgesetzt, die in einer parallel zur Achse der Drehbewegung aufgespannten Ebene erfolgt.

In den Figuren 4a und 4b ist in der Draufsicht auf einen Schnitt längs der Linie A...A gemäß Figur 3 die Stellung des gabelförmig ausgebildeten Teilstücks 12 des Verbindungselements 6 bezüglich der Lage des Schalthebels 10 des Kippschalters 13 dargestellt. Führt das gabelförmige Teilstück 12 seine Grundstellung (dargestellt in Figur 4a) verlassend aufgrund einer Drehung des Firmenemblems 1 eine Drehbewegung im Uhrzeigersinn aus (dargestellt in Figur 4b), so bewegt sich der Schalthebel 10 (in Zeichnungsebene gesehen nach oben) zwangsgeführt in eine seiner Endstellungen und löst dadurch das Alarmsignal aus. Eine Drehbewegung des gabelförmigen Teilstücks 12 in die entgegengesetzte Richtung führt den Schalthebel 10 unter Alarmauslösung in seine zweite Endlage.

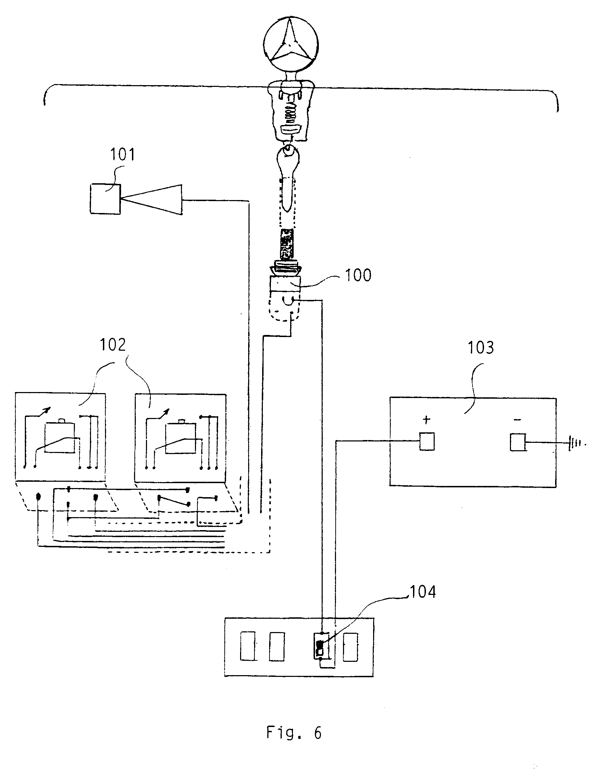

Die Ansprechempfindlichkeit der Vorrichtung zur Diebstahlsicherung, die durch den konstruktionsbedingten Schlupf bei der Kraftübertragung von dem Firmenemblem 1 auf die Schaltvorrichtung 9 bestimmt wird, kann auf einfache Weise erhöht werden, wenn als Schaltvorrichtung 9 ein durch Drehen veränderlicher elektrischer Widerstand 14 eingesetzt wird. Wie in Figur 5 dargestellt, wird die durch die unbefugt ausgeführte Verdrehung des Firmenemblems 1 hervorgerufene Widerstandsänderung von einem Wandler 15 erfaßt und, als Schaltimpuls in einem Verstärker 25 verstärkt, zur Ansteuerung eines Relais 26 genutzt, dessen Kontakte in der Alarmanlage den erforderlichen Schaltvorgang auslöst. Da von der Richtung der Verdrehung unabhängig stets eine Veränderung des Widerstandes des Potentiometers 14 erfolgt, wird das Alarmsignal in vorteilhafter Weise bei jeglichen Diebstahlsbemühungen unbefugter Personen ausgelöst.

Figur 6 zeigt in einer Gesamtdarstellung die erfindungsgemäße Vorrichtung 100, die mit dem einen Kontaktanschluß elektrisch mit dem einen Kontakt eines in einer im Armaturenbrett angeordneten Schaltertafel angeordneten Schalters 104 verbunden ist, dessen anderer Kontakt mit der Batterie 103 verbunden ist. Der andere Kontakt der erfindungsgemäßen Vorrichtung 100 ist mit einem Huprelais 102 verbunden, welches seinerseits mit einer Hupe 101 verbunden ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung zur Diebstahlsicherung eines Emblems oder eines sonstigen extern zugänglichen Zubehörteils eines Fahrzeugs, vorzugsweise des sternförmigen Emblems von Personenkraftwagen des Typs Mercedes, welches mit einer, eine Schaltvorrichtung aufweisenden elektrischen Alarmanlage verbunden ist,

   **dadurch gekennzeichnet,**

   daß sie mindestens ein Verbindungselement (6) zwischen dem extern zugänglichen Fahrzeugzubehörteil (1) und der Alarmanlage (19) aufweist, durch welches mittels einer von einem Zubehörteil ausgehenden Drehbewegung eine zum Betätigen der Schaltvorrichtung (9) der Alarmanlage (19) erforderliche Kraftkomponente übertragbar ist.

2. Vorrichtung zur Diebstahlsicherung nach Anspruch 1, **dadurch gekennzeichnet,** daß das die Drehbewegung übertragende Verbindungselement (6) über eine Kupplung (7) mit der Schaltvorrichtung (9) der Alarmanlage (19) verbunden ist.

3. Vorrichtung zur Diebstahlsicherung nach Anspruch 2, **dadurch gekennzeichnet,** daß die Kupplung (7) aus einem aufschiebbaren, elastischen Elelement besteht, das reversibel verformbar ist.

4. Vorrichtung zur Diebstahlsicherung nach Anspruch 3, **dadurch gekennzeichnet,** daß die Kupplung (7) in Form einer geraden Schraubenfeder ausgebildet ist, welche Teil einer Arretiervorrichtung zum Befestigen des Fahrzeugzubehörteils im Fahrzeug ist.

5. Vorrichtung zur Diebstahlsicherung nach Anspruch 3, **dadurch gekennzeichnet,** daß die Kupplung (7) aus einem elastischen Schlauchstück besteht.

6. Vorrichtung zur Diebstahlsicherung nach einem der Ansprüche 2 bis 4, **dadurch gekennzeichnet,** daß die Kupplung (7) als Rutschkupplung ausgebildet ist.

7. Vorrichtung zur Diebstahlsicherung nach Anspruch 2, **dadurch gekennzeichnet,** daß das die Drehbewegung übertragende Verbindungselement (6) im wesentlichen stabförmig ausgebildet ist.

8. Vorrichtung zur Diebstahlsicherung nach einem der vorangehenden Ansprüche, **dadurch gekennzeichnet,** daß sie ein Tragelement (8) aufweist, an dem die Schaltvorrichtung (9) der Alarmanlage (19) befestigt ist und das, sich parallel zu dem Verbindungselement (6) erstreckend, mit dem Befestigungseinsatz (3) des zu sichernden Fahrzeugzubehörteils (1) verbunden ist.

9. Vorrichtung zur Diebstahlsicherung nach Anspruch 8, **dadurch gekennzeichnet,** daß das Tragelement (8) winkelförmig ausgestaltet ist.

10. Vorrichtung zur Diebstahlsicherung nach einem der vorangehenden Ansprüche, **dadurch gekennzeichnet,** daß das Verbindungselement (6) aus zwei Teilstücken (11, 12) besteht, die durch die Kupplung (7) miteinander verbunden sind.

11. Vorrichtung zur Diebstahlsicherung nach Anspruch 10, **dadurch gekennzeichnet,** daß das mit der Schaltvorrichtung (9) in Wirkkontakt befindliche Teilstück (12) an einem seiner Enden gabelförmig ausgebildet ist.

12. Vorrichtung zur Diebstahlsicherung nach Anspruch 2, **dadurch gekennzeichnet,** daß die Schaltvorrichtung (9) als zweipoliger, einen Schaltkontakt (20) aufweisenden, Drehschalter ausgebildet ist.

13. Vorrichtung zur Diebstahlsicherung nach Anspruch 2, **dadurch gekennzeichnet,** daß die Schaltvorrichtung (9) als dreipoliger Kippschalter (13) ausgebildet ist.

14. Vorrichtung zur Diebstahlsicherung nach Anspruch 2, **dadurch gekennzeichnet,** daß die Schaltvorrichtung (9) als durch Drehen verstellbares Potentiometer (14) ausgebildet ist, das über einen Wandler (15) den Schaltkontakt (20) steuert.

FIG. 1

FIG. 2

FIG. 3

FIG. 4

$$\frac{dR}{dt}$$

FIG. 5

Fig. 6

Europäisches Patentamt

**EUROPÄISCHER RECHERCHENBERICHT**

Nummer der Anmeldung

EP 91 25 0118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-5 002 810 (BIRDWELL ET AL.)<br>* Spalte 1, Zeile 63 - Spalte 2, Zeile 26; Abbildungen 1-5 *<br>* Spalte 3, Zeile 5 - Zeile 22; Abbildungen 6-8 *<br>--- | 1 | B60R13/00 |
| Y | US-A-4 137 521 (MARTINEZ)<br>* das ganze Dokument *<br>--- | 1 | |
| A | DE-U-8 707 251 (SARISOY, HÜDAVERDI)<br>* das ganze Dokument *<br>--- | 1,8,9 | |
| A | WO-A-9 007 758 (GRAHAM, MICHAEL)<br>* Seite 5, Zeile 16 - Seite 6, Zeile 24; Abbildungen 1,3 *<br>--- | 1-4 | |
| A | GB-A-2 218 551 (RICHARD BOND)<br>* das ganze Dokument *<br>----- | 1 | |

**RECHERCHIERTE SACHGEBIETE (Int. Cl.5)**

B60R

Der vorliegende Recherchenbericht wurde für alle Patentansprüche erstellt

| Recherchenort | Abschlußdatum der Recherche | Prüfer |
|---|---|---|
| DEN HAAG | 25 FEBRUAR 1992 | DUBOIS B.F.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)